Europäisches Patentamt

European Patent Office

Office européen des brevets

(11) Publication number: **0 120 520**
**B1**

## (12) EUROPEAN PATENT SPECIFICATION

(45) Date of publication of patent specification: **24.05.89**

(21) Application number: **84200247.9**

(22) Date of filing: **22.02.84**

(51) Int. Cl.⁴: **G 01 S 5/18**

(54) **System for locating a sound source in a water area.**

(30) Priority: **24.02.83 SE 8301018**

(43) Date of publication of application:
**03.10.84 Bulletin 84/40**

(45) Publication of the grant of the patent:
**24.05.89 Bulletin 89/21**

(84) Designated Contracting States:
**DE FR GB IT NL SE**

(56) References cited:
**DE-A-2 137 074**
**DE-C- 977 404**
**US-A-3 183 478**
**US-A-3 546 666**
**US-A-3 723 960**
**US-A-4 070 671**

(73) Proprietor: **N.V. Philips' Gloeilampenfabrieken**
**Groenewoudseweg 1**
**NL-5621 BA Eindhoven (NL)**
㊺ **DE FR GB IT NL**

(73) Proprietor: **Philips Norden AB**
**Tegeluddsvägen 1**
**S-11584 Stockholm (SE)**
㊺ **SE**

(72) Inventor: **Gustafson, Bengt Gunnar**
**c/o INT. OCTROOIBUREAU B.V. Prof. Holstlaan 6**
**NL-5656 AA Eindhoven (NL)**

(74) Representative: **Van Schaik, Johannes**
**Wilhelmus et al**
**INTERNATIONAAL OCTROOIBUREAU B.V. Prof.**
**Holstlaan 6**
**NL-5656 AA Eindhoven (NL)**

Courier Press, Leamington Spa, England.

**Description**

The invention relates to a system for locating a sound source in a water area, comprising:

at least three hydrophone listening devices (An), each of which has a hydrophone receiver (12) and a radio transmitter (15, 16) connected to an antenna (10), said transmitter being arranged to transmit radio signals modulated by the sound information supplied to the transmitter by its associated hydrophone receiver when the listening devices are deployed in the water area to be monitored.

a master station (M1) of a known geographical position including:

(i) a radio receiver means (F1—F3, D1—D3) arranged to detect the radio signals from the listening devices,

(ii) correlator means (K1, K2) arranged to determine for each pair of at least two pairs of listening devices, the respective correlation time delay between the sound information derived from the detected radio signals originating from the two transmitters of the respective pair,

(iii) processing means arranged to determine the location of the sound source on the basis of the correlation time delays and the positions of the listening devices.

A system for locating a sound source by means of hydrophone listening, which for example is described in U.S. Letters Patent No. 3,723,960, utilizes three hydrophone transducers connected by a radio link to a master station. The signals received by the master station are correlated in order to identify a common sound source. Then the times of arrival of a discrete sound source are compared for determining the geographical position of the source. A problem with this system is that the coordinates of the hydrophone transducers must be known to some precision beforehand because, as the position of the sound source is determined with respect to the hydrophone, the precision with which the location of the source can be determined is dependent upon it.

The object of the invention is to provide in a system for discovery and localisation of a sound source within a water area, which system as compared with known systems, has an improved "endurance" in the meaning that it can be maintained during an extended time period with limited work of qualified persons and with use of simplified and therefore less expensive listening means.

This is achieved by means of a system as described in the opening paragraph, which according to the invention is characterized in that,

in addition to the master station (M1) there are provided at least two relay stations (M2, M3) at geographically known positions spaced apart from each other and from the position of the master station, said relay stations being arranged to relay the radio signals from the listening devices to the master station,

each listening device comprises switching means (18, 20) controlled to switch alternatively from a first state effecting modulation of the radio signal transmitted from the device by the sound information, to a second state resulting in modulation of the radio signal by identity information uniquely associated with the respective listening device,

the processing means of the master station (M1) is arranged to determine—on the basis of the detected identifying information and the known positions of the master and the relay stations—the geographic positions of the listening devices and to use the latter positions for determining the geographic position of the sound source.

The aforementioned object is also achieved by means of a system described in the opening paragraph, which according to the invention is characterized in that,

in addition to the master station (M1) there are provided at least two relay stations (M2, M3) at geographically known positions spaced apart from each other and from the position of the master station, said relay stations being arranged to relay the radio signals from the listening services to the master station.

the master station (M1) further comprises transmitter means arranged to transmit activating signals each of which contains identifying information uniquely related to a different one of the listening devices,

each listening device (An) comprises switching means (102, 103) arranged to initiate the transmission of the radio signals from the associated listening device is response to the reception of an activating signal the identifying information of which is related to the respective listening device,

the processing means of the master station (M1) is arranged to identify each transmitting listening device on the basis of the received radio signal and the identifying information in the activating signal resulting in the transmission of said radio signal and to determine the geographic positions of the listening devices from their respective radio signals and the known positions of the master and the relay stations, said geographic positions being used by the processing means to determine the geographic position of the sound source.

By use of the invention a monitoring can rapidly be established in each sea area along the coast without use of expensive stationary equipments. Upon indication of unknown objects within a sea area one or more listening devices are placed within the area, whereafter position determination of the sound source take place by radio transmission from some selected listening devices, which are close to the unknown object. After placing the listening devices in their positions and establishment of required stationary radio stations the monitoring work can in its whole be effected at any one of the radio stations or a special evaluation center. The monitoring in accordance with the principles of the invention therefore can be effected with a high degree of "endurance". When using a large number of listening devices these devices only need to have a limited range, whereby the listening devices furthermore can be of a simple and cheap construction.

In order to get a sea area under observation rapidly the listening devices can be placed in their positions by means of airplanes or helicopters. It is then suitable to let the listening devices assume arbitrary positions not known beforehand, for example floating freely, in which case according to another feature of the invention the position of each listening device is determined by use of the difference of travel time for radio waves to at least three radio stations having known positions.

The invention is illustrated in the accompanying drawings, in which:

Figure 1 shows a schematic survey of a monitoring system operating in accordance with the principles of the invention comprising a large number of freely floating listening devices and three stationary radio systems, of which one is master station and the two remaining relay stations,

Figure 2 shows a block diagram for an embodiment of a listening device in a system according to Figure 1,

Figure 3 shows a simplified diagram of the signal processing part in the master station, which relates to determination of the position of a sound source relative to three selected listening devices,

Figure 4 shows a simplified diagram of the signal processing part in the master station, which relates to determination of the positions of a selected listening device, and

Figure 5 shows a block diagram of a further embodiment of a listening device in a system according to Figure 1.

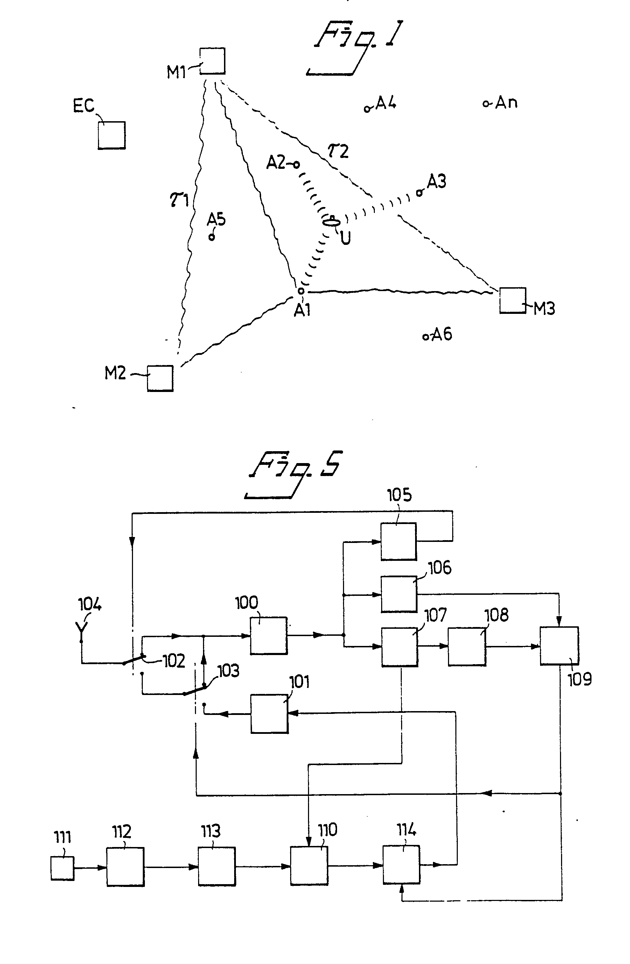

The monitoring system according to Fig. 1 comprises a number of geogrphically distributed listening devices A1, A2...An, together covering a sea area to be monitored as regards presence of possible sound sources. Such a sound source is shown at U. The distance between the listening devices is adapted to the circumstances and may for example in an archipelago type of area amounting to about 5 kilometers. The listening devices are assumed to be supported by buoys floating freely in the water.

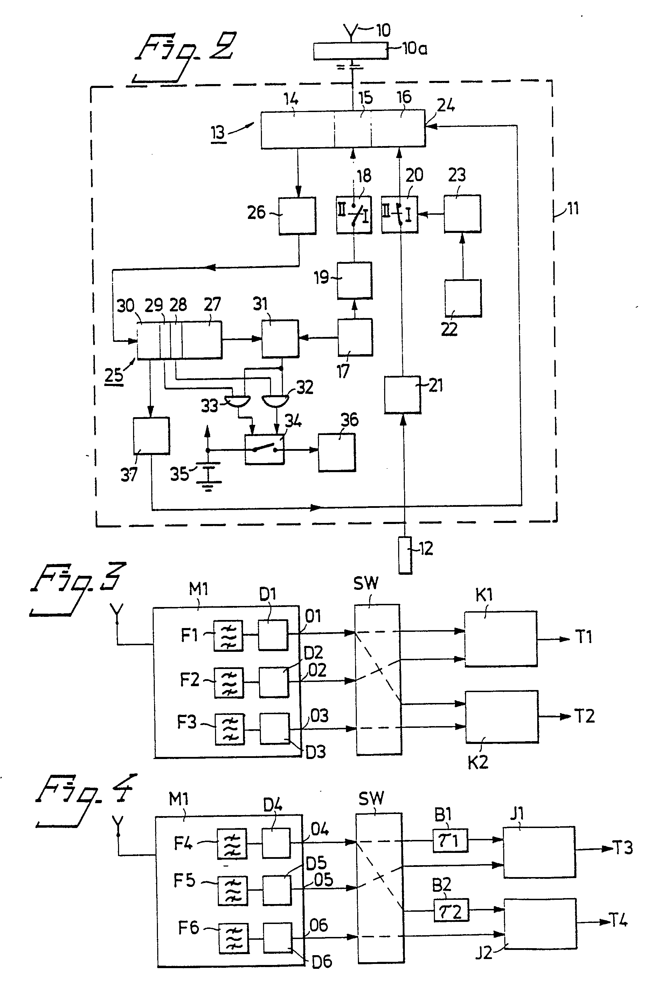

Each listening device comprises a hydrophone and a radio transmitter-receiver with associated antenna. The listening devices are individualized by a special identification address (ID address). An embodiment of a listening device will be described in connection with Fig. 2.

According to Fig. 1 the monitoring system furthermore comprises at least three radio stations M1, M2 and M3, of which M1 is a master station and M2 and M3 are relay stations. The radio stations may be stationary equipments but alternatively mobile in the meaning that they can be placed temporarily at different places in connection with a sea area to be monitored. During each measurement the radio stations have fixed and known positions. The master station comprises transmitter/receiver for transmission of control information to the listening devices and for reception of information signals from these devices and from the relay stations. In the master station there is furthermore signal processing means for carrying out certain signal processing in real time. Via a radio link or in another manner the master station can be in communication with an evaluation center EC, where final signal processing and position determination takes place. The relay stations M2, M3 also comprise transmitter/receiver and are adapted to receive certain signals from the listening devices and to retransmit them to the master station in different radio channels.

The position determination is in principle effected in the following manner.

It is assumed that only the listening devices A1, A2 and A3, which are in the best position for localization of the sound source U, are active. These listening devices transmit simultaneously and each in its radio channel and detected sound on radio carrier to the master station. In the master station the radio waves are demodulated and the obtained sound waves are correlated two and two. Each correlation results in a time difference, which represents a given hyperbola. The sound source is then situated in the crosspoint between the obtained two hyperbolas (in some cases theoretically two cross-points are obtained, of which, however, one can be excluded). At this position determination the difference between the travel time of the different radio waves is not taken into account, because the travel time for the sound waves in the water is appreciably longer than the travel time of the radio waves.

At regular intervals each listening device interrupts its transmission of sound waves and transmits instead its ID-address in a particular radio channel. These ID-addresses are relayed further by the relay stations M2 and M3 in new radio channels. It is then assumed that at a given time moment only one listening device, for example A1, is transmitting its ID-address. The master station then obtains this ID-adderss directly in one radio channel and the same address via M2 in another channel and via M3 in a third channel. As the stations M1, M2 and M3 have known positions also the travel times between M2 and M1 ($=\tau1$) and between M3 and M1 ($=\tau2$) are known. By correlation the ID-signal obtained directly from A1 with that obtained via M2 with compensation for the known travel time $\tau1$ a time difference representing a hyperbola will be obtained. In corresponding manner by correlating the ID-signal obtained directly from A1 with that obtained via M3 with compensation for the known travel time $\tau2$ a time difference repesenting a second hyperbola is obtained. In the cross-point between these hyperbolae A1 is then situated. The listening devices A2 and A3 are localized in the same manner during those intervals, when they are transmitting ID-signal.

Now, when the position of the sound source U relative to the listening devices A1, A2, A3 and the position of each one of these devices is determined, then full information about the absolute position of the sound source U is available.

In order to elucidate the function there follows a table showing the different signals appearing in the system, the given band widths and modulation types being valid for an embodiment described as an example in the following.

Signal No. 1
Purpose: To transmit the sound of the object to listening buoys.
Travel path: Object to at least three selected buoys.
Basic type: Sound waves in water.
Spectrum: 10 Hz or less up to 1000 Hz.
Modulation: Missing, No carrier.

Signal No. 2.
Purpose: To enable position determination of the object relative to the selected buoys.
Travel path: From the buoys to a radio receiver on land.
Basic type: Radio waves. Modulated carrier (for example 300 MHz).
Spectrum: Of the order 10 kHz.
Modulation: Sub-carrier, one for each buoy modulated with signal No. 1 on a main carrier.

Signal No. 3.
Purpose: To enable position determination of buoy.
Travel path: From actual buoy to at least three radio receivers on land.
Basic type: Radio waves. Modulated carrier (for example 300 MHz).
Spectrum: For example 1—10 MHz.
Modulation: Pulse modulated key signal.
Note: One of the land stations can be master, the signals of the two other receivers being retransmitted to this master.

Signal No. 4.
Purpose: Buoy-selective commando; activation and channel selection.
Travel path: From one land station to a buoy (one at a time).
Basic type: Radio waves. Modulated carrier (300 MHz).
Spectrum: Dependent on required commando speed; for example 10 kHz in case of reasonable commando speed.
Modulation: Pulse modulated key signal.

Signal No. 5.
Purpose: Area selective activation.
Travel path: From three land stations to all buoys within a region specified by the signal.
Basic type: Radio waves. Modulated carrier (for example 300 MHz).
Spectrum: Dependent on desired accuracy at the area-selection; (for example 1—10 MHz).
Modulation: Pulse modulation.

It is evident from the above table that only the signals Nos. 3 and 5 will have a broad band; all other signals have a small spectrum (=band width). The signal No. 5 relating to area-selective activation of the buoys, i.e. activation of all buoys within a selected area, has been included for completeness sake in the above table but will not be discussed further in this specification. As regards signal No. 5 reference is made to Swedish patent application No. 8301019—9, in which an example of such an area selective activation is described.

Fig. 2 shows schematically the build-up of an embodiment of a listening device in the shape of a buoy adapted to float freely in a sea area to be supervised. The buoy consists of an antenna 10 which is kept floating in the water surface by means of a floating body 10a and a body 11, the connection cable of which has such a length and the specific gravity of which is such that it is floating at a suitable depth below the water surface. At the bottom the buoy is provided with a hydrophone 12 for detecting sound waves or pressure waves in the water.

The body 11 contains the electric circuits included in the listening device, i.e. comprising a transmitter/receiver unit 13 connected to the antenna. This unit is in the drawing illustrated as containing a receiver 14 and two separate transmitters 15 and 16. The transmitter 15 is adapted to transfer identification information to the master station and has an input connected to a memory 17 via a switch 18 and a scanner 19. The memory contains an ID-number which is unique for each listening device, which information is detected and converted to serial form by the scanner 19. The transmitter 16 is adapted to transfer detected sound and has an input connected to the hydrophone 12 via a switch 20 and signal converter 21. The switches 18 and 20 are switched in synchronism between a first position I, in which the switch 20 is closed and the switch 18 is open, and a second position II, in which the switch 18 is closed and 20 is open. Activation of the switches is effected from a clock 22 via a drive stage 23. The time control can be such that the switches normally are in the position I and only for a short time with constant intervals are set to the position II, the switches being for example in the position II during 10 ms each tenth second. The clock can run somewhat differently in the different buoys in order to prevent that several devices are transmitting ID-information simultaneously during any longer time period.

The information transfer via the transmitters 15, 16 is effected by modulation of a HF carrier, the transmitter 16 being adapted to transmit in several different channels, while the transmitter 15 has its own channel. The channel used in 16 can be selected by means of a control signal at a control input 24. In reality it is not necessary to have two separate transmitters but a common transmitter can be used, in which case 16 is represented by a given channel in this transmitter. The channel separation can be achieved thereby that each channel has its own carrier or its own subcarrier on a common HF-carrier.

The receiver 14, which is also connected to the antenna 10, is adapted to receive control information and has an output connected to a register 25 via a detector 26. The control information can be shaped as a pulse train of HF pulses representing a digital message, the register 25 then can be shaped as a shift register to which this message is fed and stored. As an example of how such a message can be composed Fig. 2 shows a register 25 consisting of a number of sections. A first section 27 stores a digit sequence representing the ID-number for the listening device to be controlled. This section of the shift register is connected to a comparison device 31, which at a second input receives information from the ID-memory 17. A second section 28 stores a digit representing an activation command and a section 29 stores a digit representing a de-activation command. Finally a section 30 stores a number representing the actual channel to be used. The output of the comparison device 31 is connected to one input of an AND-gate 32 having a second input connected to the section 28 of the shift-register 25. The output of the comparison device 31 also leads to one input of an AND-gate 33 having a second input connected to the section 29 of the register 25. The output of the AND-gate 32 leads to a set control input of a controllable switch 34 and the output of the AND-gate 33 leads to the rest control input of the same switch, when signal is obtained from the AND-gate 32 the switch 34 will be closed for connecting a current source 35 to a block 36 representing those elements in the transmitter part, which require drive voltage. The transmitter then will be activated. In the case of a signal from the AND-gate 33 the switch 34 will be opened and the transmitter part is de-activated. Those elements in the receiver part, which require drive voltage, are always connected to the current source and the receiver is continuously activated. The last section 30 of the shift register 25 is connected to the control input of the transmitter 16 via a converter 37 adapted to convert the channel digit number in the register 25 to a suitable control voltage for the transmitter.

The operation is as follows.

When a listening device is to be activated, the master station transmits a pulse train, the first part of which reaching the section 27 contains the ID-number of the actual listening device and the second part of which reaching the section 28 represents the activation command and finally a pulse train reaching the section 30 representing the channel to be selected. The transmitter is activated and the sound detected by the hydrophone, if any, is transmitted in the selected channel. Each tenth second the transmission of sound information is interrupted and instead the ID information is transmitted from the memory 17 in the special channel. During this ID transmission position determination of the actual listening device takes place. This continues until the master station again transmits the ID number of the actual device together with a signal which ends-up in the section 29 of the register 25, whereby the transmitter is de-activated.

Fig. 3 shows schematically the signal processing part of the receiver of the master station M1, which is concerned with determination of the position of a sound source relative to three selected listening devices. If the channels are frequency channels, i.e. a special carrier or subcarrier for each channel, the receiver part consists in principle of a number of bandpass filters each tuned to its frequency, in case of sub-carrier preceded by a filter and mixing stage for suppression of the main carrier, Fig. 3 showing the receiver channels for three selected listening devices represented by the band pass filters F1, F2 and F3 with associated detectors D1, D2 and D3. The detectors are each connected to an output O1, O2 and O3, where the low frequency modulation signals in the respective channel appear. At the outputs O1, O2 and O3 thus the same sound information appears but in different time positions dependent on different travel times for sound in the water to the respective listening device (then the differences in travel time for the radio waves in the air is not taken into account). The signal processing is in principle effected such that the sound signals are correlated two and two for determining their mutual time difference. Thus, in Fig. 3 the signals at the outputs O1 and O2 are coupled via a switching network SW to a first correlator K1, while the signals at the outputs O1 and O3 via the switching network SW are led to a second correlator. The correlator K1 produces the time difference T1 and the correlator K2 produces the time difference T2. The time differences T1 and T2 each represent a hyperbola and the sound source U is situated in the cross-point between these hyperbolae.

Fig. 4 illustrates schematically how the position of the different listening devices can be determined by showing the components in the master station required for localization of the first listening device A1 (Fig. 1). The localization of the listening devices is as mentioned effected during the short interrupts in the second transmission, when ID information is transmitted in a special channel. It is assumed that the device A1 is the only one to transmit ID information at a certain time moment. This information is transmitted as a pulse train in the given channel, i.e. on a given channel frequency, and is retransmitted by the selected relay stations M2 and M3 in two other channels. In order to separate these signals the master station contains three bandpass filters, a first filter F4 tuned to the channel frequency used by the listening device A1 (and also by remaining listening devices) for transmission of its ID information, and two filters F5 and F6 toned to those channel frequencies, to which the said frequency is converted in the relay station M2 and M3, respectively. The filters F4, F5 and F6 are each connected via its detector D4, D5, D6 to an output O4, O5, O6. Thus, at these outputs one and the same ID information will appear, namely in the regarded example the ID-address for the listening device A1, but in different time positions. The signal processing for determining the position of the device A1 is in principle effected such that the ID signals at the said outputs are compared two and two after correction for the known travel times from M2 to M1 and from M3 to M1, respectively, for determining their mutual time difference when they arrived to the respective stations MN1, M2 and M3. Thus, the signal at the first ouitput O4 is coupled to a first input on a comparison device J1 via a time delay circuit B1 which delays the signal the known travel time τ1 from M2 to M1, while the signal at O5 is led directly to a second input on the comparison device J1. In corresponding manner the signal at the output O4 is coupled to a first input on a second comparison device J2 via a time delay circuit B2 which delays the signal the known travel time τ2 from M3 to M1, while the signal at the output O6 is coupled directly to a second input on J2. The comparison device J1 delivers on output signal representing a time difference T3, while J2 delivers a signal repesenting a time difference T4. The time differences T3 and T4 each represent a hyperbola and A1 is situated in the cross-point between these hyperbolae. The time differences T3 and T4 or possibly the calculated position are stored together with the ID-number of the device A1.

At different succeeding time moments the corresponding information then will arrive from A2 and A3, which are localized in the same manner and with the same circuits. Each tenth second the ID-number from A1 arrrives again and the stored information about the position of the device is continuously updated.

The operation of the whole system is as follows.

After placing the listening devices in their positions in a sea area containing a possible sound source and establishment of the stationary stations M1, M2 and M3, a general information collecting phase is first started aiming at to determine if there are reliable indications of a sound source within the supervised area and, if so, its approximate position. This information collecting phase may for example involve that the listening devices are called and activated in successive order. As soon as a listening device is activated it will transmit the detected sound and its ID-number, whereby the position of the station can be determined. The ID-number, position and a coarse information about detected sound is stored. Now, if it turns out that a number of adjacent listening devices detect a sound exceeding a certain level and of similar character only these listening devices are activated and measuring of the position of the sound source is effected in described manner.

In order to optimize the information transmission in relation to required band width the sound signals can be digitized and channel separation be achieved by means of time multiplex. Fig. 5 shows a simplified block diagram for a listening device operating according to this principle. The listening devices (buoys) are assumed to co-operate with a number of stationary radio stations one of which, the master, comprising an accurate clock and transmitting synchronization or adjusting pulse to all buoys and activation control order to certain selected buoys. Each buoy has a receiver 100 and a transmitter 101. The receiver 100 is connected to an antenna 104 via two switches 102, 103 normally assuming the shown position. The transmitter 101 can be connected briefly to the antenna 104 via the same switches. To the output of the receiver 100 are connected three detectors, an ID-detector 105, a channel detector 106 and a synchronization detector 107. The synchronization detector 107 controls a clock 108, the output signal of which in combination with the output signal from the channel detector 106 being adapted to control a channel selection circuit 109. A memory 110 is continuously loaded with samples of the sound signal detected by a hydrophone 111, which samples are generated by means of an amplifier 112 and an A/D converter 113. The information in the memory 110 is led via a reading device 114 to the input of the transmitter 101. The memory 110 is zeroed by means of the signal from the synchronization detector 107, while the reading device 114 is activated from the channel selection circuit 109. This circuit also controls the switch 103, while the switch 102 is controlled by means of signal from the ID-detector 105.

The operation is as follows.

With regular time intervals, for example of the magnitude of 0,1—10 seconds, synchronization or adjusting pulse will arrive for zeroing the clocks in all buoys. These clocks therefore can have modest accuracy and be of cheap construction. With the assumed extended time intervals the difference in the travel time for the synchronization pulse to different buoys will be negligible and the clocks can be assumed to run in synchronism. At the same time the memory 110 is zeroed, which memory has such a capacity that it can store all samples representing the sound signal in the whole time interval between two sync pulses. This time interval between two sync pulses is divided into a number of sub-intervals, for example ten, each representing a channel and for example having a length of 0,01—1 seconds. To each sub-interval is associated a channel number 1, 2...10. When the master wants a certain buoy to transmit its detected sound it first transmits the ID-number of the buoy immediately followed by a signal representing order about activation. The ID detector 105 in the actual buoy reacts and sets the switch 102 to the opposite position as compared with the shown one. The buoy is now activated for transmission. Immediately thereafter the master transmits a pulse sequence representing the channel number to allot to the buoy. This pulse sequence is detected by the channel detector 106 controlling the channel selection circuit 109 so that this circuit 109 delivers a signal a number of sub-intervals after a sync pulse, which number is equal to the channel number. The signal from the circuit 109 sets the switch 103 to the opposite position as compared with the shown one and initiates the reading device 114. When the reading device 114 receives a control signal the memory 110 is scanned with high speed and the sampled sound signal is transmitted in compressed form via he antenna 104 by modulation on a radio carrier in the actual time channel. The same thing is then repeated for another buoy in another channel. In the master station and the remaining stationary stations the relationship channel/ID-number is stored. Therefore the stored sequences representing the sound signals detected by the different buoys can be shifted in time with account being taken of the time positions of the different channels and correlation being effected in the manner described previously. If desired further shifting can be effected for making correction of time errors arising due to the different travel time of the sync pulse to different buoys.

Instead of selective individual activation, as in the described embodiments, it is alternatively possible to activate the listening devices groupwise, for example in dependence on their geographical position, as described in the Swedish patent application No. 8301019—9.

If stationary listening devices are present in vicinity of the area to be monitored it is also possible to use these devices in combination with one or several of the free-floating buoys provided with radio-transmitters.

**Claims**

1. A system for locating a sound source in a water area, comprising:
at least three hydrophone listening devices (An), each of which has a hydrophone receiver (12) and a radio transmitter (15, 16) connected to an antenna (10), said transmitter being arranged to transmit radio signals modulated by the sound information supplied to the transmitter by its associated hydrophone receiver when the listening devices are deployed in the water area to be monitored,
a master station (M1) of a known geographical position including:
(i) a radio receiver means (F1—F3, D1—D3) arranged to detect the radio signals from the listening devices,
(ii) correlator means (K1, K2) arranged to determine for each pair of at least two pairs of listening devices, the respective correlation time delay between the sound information derived from the detected radio signals originating from the two transmitters of the respective pair,
(iii) processing means arranged to determine the location of the sound source on the basis of the correlation time delays and the positions of the listening devices, the system being characterized in that
in addition to the master station (M1) there are provided at least two relay stations (M2, M3) at geographically known positions spaced apart from each other and from the position of the master station, said relay stations being arranged to relay the radio signals from the listening devices to the master station,
each listening device comprises switching means (18, 20) controlled to switch alternatively from a first state effecting modulation of the radio signal transmitted from the device by the sound information, to a second state resulting in modulation of the radio signal by identity information uniquely associated with the respective listening device,
the processing means of the master station (M1) is arranged to determine—on the basis of the detected identifying information and the known positions of the master and the relay stations—the geographic positions of the listening devices and to use the latter positions for determining the geographic position of the sound source.

2. A system for locating a sound source in a water area; comprising:
at least three hydrophone listening devices (An), each of which has a hydrophone receiver (12) and a radio transmitter (15, 16) connected to an antenna (10), said transmitter being arranged to transmit radio signals modulated by the sound information supplied to the transmitter by its associated hydrophone receiver when the listening devices are deployed in the water area to be monitored,
a master station (M1) of a known geographical posiotion including:
(i) radio receiver means (F1—F3, D1—D3) arranged to detect the radio signals from the listening devices,
(ii) correlator means (K1, K2) arranged to determine for each pair of at least two pairs of listening devices, the respective correlation time delay between the sound information derived from the detected radio signals originating from the two transmitters of the respective pair,
(iii) processing means arranged to determine the location of the sound source on the basis of the correlation time delays and the positions of the listening devices, the system being characterized in that
in addition to the master station (M1) there are provided at least two relay stations (M2, M1) at geographically known positions spaced apart from each other and from the position of the master station, said relay stations being arranged to relay the radio signals from the listening services to the master station,
the master station (M1) further comprises transmitter means arranged to transmit activating signals each of which contains identifying information uniquely related to a different one of the listening devices,
each listening device (An) comprises switching means (102, 103) arranged to initiate the transmission of the radio signals from the associated listening device in response to the reception of an activating signal the identifying information of which is related to the respective listening device,

the processing means of the master station (M1) is arranged to identify each transmitting listening device on the basis of the received radio signal and the identifying information in the activating signal resulting in the transmission of said radio signal and to determine the geographic positions of the listening devices from their respective radio signals and the known positions of the master and the relay stations, said geographic positions being used by the processing means to determine the geographic position of the sound source.

3. A system for locating a sound source in a water area as claimed in Claim 1, characterized in that the switching means (18) of each listening device includes two switches (18, 20) synchronously coupled with each other so as to apply either the identifying information or the sound information to the radio transmitter of the respective listening device by closing one of the switches and opening the respective other one.

**Patentansprüche**

1. System zum Orten einer Schallquelle in einem Seegebiet mit

wenigstens drei Hydrophon-Horchanordnungen (An), mit je einem Hydrophon-Empfänger (12) und einem mit einer Antenne (10) verbundenen Sender (15, 16), der Funksignale aussendet, die mit der Schallinformation moduliert sind, die dem Sender zugeführt wird mittels des zugeordneten Empfängers, wenn die Horchanordnungen in dem zu überwachenden Seegebiet entfaltet sind,

einer Hauptstelle (M1) einer bekannten geographischen Lage mit

(i) Empfangsmitteln (F1—F3, D1—D3) zum Detektieren der von den Horchanordnungen herrührenden Funksignale

(ii) Korrellationsmitteln (K1, K2) zum für jedes Paar von mindestens zwei Paaren Horchanordnungen Ermittels der betreffenden Korrelationszeitverzögerung zwischen der Schallinformation, die von den detektierten Funksignalen abgeleitet ist, die von den zwei Sendern des betreffenden Paares herrühren,

(iii) Verarbeitungsmitteln zum Ermitteln der Lage der Schallquelle auf Basis der Korrelationszeitverzögerungen und der Lagen der Horchanordnungen, dadurch gekennzeichnet, dass

ausser der Hauptstelle (M1) wenigstens zwei Relaisstellen (M2, M3) an geographisch bekannten in einem Abstand voneinander und von der Hauptstelle liegenden Stellen vorgesehen sind, wobei diese Relaisstellen die Funksignale von den Horchanordnungen zu der Hauptstelle übertragen,

jede Horchanordnung Schaltmittel (18, 20) aufweist, die wechselweise aus einem ersten Zustand, in dem das von der Anordnung ausgestrahlte Funksignal mit der Schallinformation moduliert wird, in einen zweiten Zustand schalten, wodurch eine Modulation des Funksignals mit Kenninformation herbeigeführt wird, die einzigartig der betreffenden Horchanordnung zugeordnet ist,

die Verarbeitungsmittel der Hauptstelle (M1) dazu vorgesehen sind,

auf Basis der detektierten Kenninformation und der bekannten Lagen der Haupt- und Relaisstellen—die geographischen Lagen der Horchstellen zu detektieren und diese Lagen zur Ermittlung der geographischen Lage der Schallquelle zu benutzen.

2. System zum Orten einer Schallquelle in einem Seegebiet mit

wenigstens drei Hydrophon-Horchanordnungen (An), mit je einem Hydrophon-Empfänger (12) und einem mit einer Antenne (10) verbundenen Sender (15, 16), der Funksignale aussendet, die mit der Schallinformation moduliert sind, die dem Sender zugeführt wird mittels des zugeordneten Empfängers, wenn die Horchanordnungen in dem zu überwachenden Seegebiet entfaltet sind,

einer Hauptstelle (M1) einer bekannten geographischen Lage mit

(i) Empfangsmittels (F1—F3, D1—D3) zum Detektieren der von den Horchanordnungen herrührenden Funksignale

(ii) Korrellationsmitteln (K1, K2) zum für jedes Paar von mindestens zwei Paaren Horchanordnungen Ermitteln der betreffenden Korrelationszeitverzögerung zwischen der Schallinformation, die von den detektierten Funksignalen abgeleitet ist, die von den zwei Sendern des betreffenden Paares herrühren,

(iii) Verarbeitungsmitteln zum Ermitteln der Lage der Schallquelle auf Basis der Korrelationszeitverzögerungen und der Lagen der Horchanordnungen, dadurch gekennzeichnet, dass

ausser der Hauptstelle (M1) wenigstens zwei Relaisstellen (M2, M3) an geographisch bekannten in einem Abstand voneinander und von der Hauptstelle liegenden Stellen vorgesehen sind, wobei diese Relaisstellen die Funksignale von den Horchanordnungen zu der Hauptstelle übertragen,

die Hauptstelle (M1) weiterhin Sender aufweist zum Ausstrahlen von Aktivierungssignalen, die je Kenninformation aufweisen, die einzigartig je einer anderen der Horchanordnungen zugeordnet sind,

jede Horchanordnung (An) Schaltmittel (102, 103) aufweist zum Einleiten der Ausstrahlung der Funksignale von den zugeordneten Horchanordnungen in Antwort auf den Empfang eines Aktivierungssignals, dessen Kenninformation der betreffenden Horchanordnung zugeordnet ist,

die Verarbeitungsmittel der Hauptstelle (M1) dazu vorgesehen sind, jede sendende Horchanordnung auf Basis des empfangenen Funksignals und der Kenninformation zu identifizieren, was zu der Ausstrahlung des genannten Funksignals führt und die geographischen Lagen der Horchanordnungen zu Ermitteln und zwar aus ihren betreffenden Funksignalen und den bekannten Lagen der Haupt- und der Relaisstellen, wobei diese geographischen Lagen von den Verarbeitungsmitteln dazu benutzt werden, die geographische Lage der Schallquelle zu ermitteln.

3. System zur Orten einer Schallquelle in einem Seegebiet nach Anspruch 1, dadurch gekennzeichnet, dass die Schaltmittel (18) jeder Horchanordnung zwei synchron gekoppelte Schalter (18, 20) aufweisen, durch die dem Sender der betreffenden Horchanordnung entweder die Kenninformation oder die Schallinformation zugeführt wird, indem einer der Schalter geschlossen und der andere geöffnet wird.

**Revendications**

1. Système pour repérer une source sonore dans un milieu maritime, comprenant:

au moins trois appareils d'écoute à hydrophone (An), qui comportent chacun un récepteur hydrophone (12) et un émetteur radio (15, 16) connecté à une antenne (10), l'émetteur étant prévu pour transmettre des signaux radio modulés par l'information sonore fournie à l'émetteur par son récepteur hydrophone associé lorsque les appareils d'écoute sont déployés dans le milieu maritime à surveiller,

une station maîtresse (M1) de position géographique connue comprenant:

(i) des moyens récepteurs radio (F1—F3, D1—D3) propres à détecter les signaux radio des appareils d'écoute;

(ii) des corrélateurs (K1, K2) propres à déterminer, pour chacune d'au moins deux paires d'appareils d'écoute, le retard de corrélation respectif entre l'information sonore déduite des signaux radio détectés en provenance des deux émetteurs de la paire en question;

(iii) des moyens de traitement propres à déterminer l'emplacement de la source sonore sur la base des retards de corrélation et des positions des appareils d'écoute; le système étant caractérisé en ce que:

en plus de la station maîtresse (M1), sont prévues au moins deux stations relais (M2, M3) installées en des positions connues géographiquement qui sont espacées l'une de l'autre et de la position de la station maîtresse, ces stations relais étant prévues pour relayer les signaux radio des appareils d'écoute à la station maîtresse;

chaque appareil d'écoute comprend des moyens de commutations (18, 20) commandés de manière à commuter alternativement, à partir d'un premier étant assurant la modulation du signal radio transmis par l'appareil par l'information sonore, vers un second état entraînant une modulation du signal radio par de l'information d'identité associée de manière unique à l'appareil d'écoute en question;

le dispositif de traitement de la station maîtresse (M1) est prévu pour déterminer—sur la base de l'information d'identification détectée et

des positions connues de la station maîtresse et des stations relais—les positions géographiques des appareils d'écoute et pour utiliser ces dernières positions aux fins de déterminer la position géographique de la source sonore.

2. Système de repérage d'une source sonore dans un milieu maritime, comprenant:

au moins trois appareils d'écoute à hydrophone (An), qui comportent chacun un récepteur hydrophone (12) et un émetteur radio (15, 16) connecté à une antenne (10), l'émetteur étant prévu pour transmettre des signaux radio modulés par l'information sonore fournie à l'émetteur par son récepteur hydrophone associé lorsque les appareils d'écoute sont déployés dans le milieu maritime à surveiller;

une station maîtresse (M1) de position géographique connue comprenant:

(i) des moyens récepteurs radio (F1—F3, D1—D3) propres à détecter les signaux radio des appareils d'écoute;

(ii) des corrélateurs (K1, K2) propres à déterminer, pour chacune d'au moins deux paires d'appareils d'écoute, le retard de corrélation respectif entre l'information sonore déduite des signaux radio détectés en provenance des deux émetteurs de la paire en question;

(iii) des moyens de traitement propres à déterminer l'emplacement de la source sonore sur la base des retards de corrélation et des positions des appareils d'écoute; le système étant caractérisé en ce que:

en plus de la station maîtresse (M1), sont prévues au moins deux stations relais (M2, M3) en des positions connues géographiquement qui sont espacées l'une de l'autre et de la position de la station maîtresse, ces stations relais étant prévues pour relayer les signaux radio des appareils d'écoute à la station maîtresse;

la station maîtresse (M1) comprend, en outre, un émetteur propre à émettre des signaux d'activation contenant chacun de l'information d'identification se rapportant de manière unique à un appareil d'écoute particulier;

chaque appareil d'écoute (An) comprend des moyens de commutation (102, 103) propres à amorcer la transmission des signaux radio de l'appareil d'écoute associé en réaction à la réception d'un signal d'activation dont l'information d'identification se rapporte à l'appareil d'écoute en question;

le dispositif de traitement de la station maîtresse (M1) est prévu pour identifier chaque appareil d'écoute émetteur sur la base du signal radio reçu et de l'information d'identification présente dans le signal d'activation résultant de l'émission du signal radio et pour déterminer ces positions géographiques des appareils d'écoute à partir de leurs signaux radio respectifs et des positions connues de la station maîtresse et des stations relais, ces positions géographiques étant utilisées par le dispositif de traitement pour déterminer la position géographique de la source sonore.

3. Système de repérage d'une source sonore dans un milieu maritime suivant la revendication 1, caractérisé en ce que le dispositif de commutation (18) de chaque appareil d'écoute comprend deux interrupteurs (18, 20) couplés de manière synchrone l'un à l'autre afin d'appliquer l'information d'identification ou l'information sonore à l'émetteur radio de l'appareil d'écoute en question par la fermeture de l'un des interrupteurs et l'ouverture de l'autre.

Fig. 1

Fig. 5

1

*Fig. 2*

*Fig. 3*

*Fig. 4*